# EUROPÄISCHE PATENTANMELDUNG

(11) **EP 4 353 505 A1**
(43) Veröffentlichungstag der Anmeldung: **17.04.2024**
(21) Anmeldenummer: 23201508.1
(22) Anmeldetag: 04.10.2023
(51) Int. Cl.: B60J 7/10, B61D 17/22, F16B 5/06

(54) **DICHTEINRICHTUNG ZUM DICHTEN VERBINDEN EINES ERSTEN KÖRPERS MIT EINEM ZWEITEN KÖRPER, INSBESONDERE FÜR EINE GLEISBAUVORRICHTUNG**

(30) Priorität: 14.10.2022 AT 507982022
(71) Anmelder: Plasser & Theurer, Export von Bahnbaumaschinen, Gesellschaft m.b.H., 1010 Wien (AT)
(72) Erfinder: LEITNER, Julian, 4113 St. Martin im Mühlkreis (AT)

(57) **Zusammenfassung**

Eine Dichteinrichtung (14) zum dichten Verbinden eines ersten Körpers (15) mit einem zweiten Körper (16), insbesondere für eine Gleisbauvorrichtung (1), umfasst ein Dichtteil (19), ein erstes Basisteil (17) zum Befestigen an dem ersten Körper (15), und ein erstes Kopplungsteil (18), mit einem ersten Verbindungsmittel (20) zum Verbinden mit dem Dichtteil (19), und einem zweiten Verbindungsmittel (21) zum Verbinden mit dem ersten Basisteil (17). Eine Vorrichtung (1) umfasst einen ersten Körper (15), einen zweiten Körper (16), und mindestens eine mit dem ersten Körper (15) und mit dem zweiten Körper (16) verbundene Dichteinrichtung (14).

## Beschreibung

Die Erfindung betrifft eine Dichteinrichtung zum dichten Verbinden eines ersten Körpers mit einem zweiten Körper, insbesondere für eine Gleisbauvorrichtung. Ferner betrifft die Erfindung eine Vorrichtung mit einer derartigen Dichteinrichtung, insbesondere eine Gleisbauvorrichtung.

Aus offenkundiger Vorbenutzung sind Gleisbauvorrichtungen bekannt, aufweisend aneinander angrenzende, als Außenwände ausgebildete erste und zweite Körper, zwischen denen sich ein Dichtspalt erstreckt. Zum dichten Verbinden des ersten Körpers mit dem zweiten Körper ist eine Dichteinrichtung vorgesehen mit einem Dichtteil aus einem gummielastischen Material, das mit dem ersten und dem zweiten Körper verklebt ist. Derartige Dichteinrichtungen sind aufwändig und fehleranfällig in der Montage und nicht ausreichend robust gegenüber Verschleiß, insbesondere aufgrund mechanischer, insbesondere dynamischer, Beanspruchungen und Korrosion.

Es ist eine Aufgabe der Erfindung eine verbesserte Dichteinrichtung zum dichten Verbinden eines ersten Körpers mit einem zweiten Körper, insbesondere für eine Gleisbauvorrichtung zu schaffen, welche insbesondere besonders wirtschaftlich herstellbar und montierbar sowie robust im Betrieb ist.

Diese Aufgabe wird durch ein Dichteinrichtung mit den Merkmalen des Anspruchs 1 gelöst. Erfindungsgemäß wurde erkannt, dass eine Dichteinrichtung zum dichten Verbinden eines ersten Körpers mit einem zweiten Körper ein Dichtteil, ein Basisteil zum Befestigen an dem ersten Körper und ein erstes Kopplungsteil zum Verbinden mit dem Dichtteil und mit dem ersten Basisteil aufweisen kann, um eine besonders wirtschaftliche und zuverlässige Montage zu gewährleisten. Dadurch, dass das Dichtteil nicht unmittelbar mit dem ersten Körper verbunden werden muss, wird die Montage der Dichteinrichtung erheblich vereinfacht. Die Dichteinrichtung kann mittels des ersten Basisteils besonders präzise an dem ersten Körper angebracht werden, sodass die Montage zuverlässig mit hoher Qualität erfolgen kann. Das Kopplungsteil ermöglicht eine einfache Anbringung des Dichtteils an dem Basisteil. Insbesondere kann das Dichtteil an dem Basisteil auswechselbar angebracht sein. Mittels des Kopplungsteils kann das Dichtteil mit dem ersten Basisteil präzise und mit definierter Montagekraft verbunden werden. Überbeanspruchungen, insbesondere des Dichtteils, werden vermieden. Hierdurch ist die Dichteinrichtung besonders zuverlässig und robust im Betrieb.

Der erste Körper und/oder der zweite Körper sind vorzugsweise Bestandteile einer immobilen Vorrichtung, insbesondere eines Infrastrukturelements, und/oder einer mobilen Vorrichtung, insbesondere einer mobilen Gleisbauvorrichtung, und/oder eines Schienenfahrzeugs. An eine Dichteinrichtung für eine Gleisbauvorrichtung, insbesondere ein Gleisbaufahrzeug, sind besonders hohe Anforderungen hinsichtlich der Dichtheit und der mechanischen Robustheit zu stellen. Gegenüber Regenwasser und Verschmutzungen, insbesondere Staub, muss die Dichteinrichtung ein dichtes Verbinden des ersten Körpers mit dem zweiten Körper, insbesondere bei hohen Fahrgeschwindigkeiten, zuverlässig gewährleisten. Aufgrund der bei der Bearbeitung des Gleises, insbesondere bei einem Gleisstopfvorgang, wirkenden Kräfte, insbesondere Vibrationen, kann es zu dynamischen Belastungen der Dichteinrichtung, insbesondere aufgrund von Relativbewegungen zwischen dem ersten und dem zweiten Körper, kommen. Gegenüber derartigen Belastungen ist die Dichteinrichtung besonders robust.

Der erste Körper und/oder der zweite Körper sind vorzugsweise durch eine Außenwand, insbesondere eine Dachwand, insbesondere ein Kabinendach, und/oder eine Seitenwand und/oder einen Bodenwand, der Vorrichtung, insbesondere der Gleisbauvorrichtung, gebildet. Die Dichteinrichtung ist vorzugsweise zum Verbinden mit einer Außenfläche des ersten Körpers und/oder des zweiten Körpers ausgebildet.

Gemäß einem Aspekt der Erfindung weist das Dichtteil ein Gegen-Verbindungsmittel zum Verbinden mit dem ersten Verbindungsmittel des Kopplungsteils auf. Dieses Gegen-Verbindungsmittel kann einstückig mit dem Dichtteil ausgebildet sein. Das erste Basisteil kann ein Gegen-Verbindungsmittel zum Verbinden mit dem zweiten Verbindungsmittel des Kopplungsteils aufweisen. Dieses Gegen-Verbindungsmittel kann einstückig mit dem ersten Basisteil ausgebildet sein. Das erste Verbindungsmittel und/oder das zweite Verbindungsmittel sind vorzugsweise einstückig mit dem Kopplungsteil, insbesondere miteinander, ausgebildet.

Die Dichteinrichtung kann zum Abdichten eines Dichtspalts zwischen dem ersten und dem zweiten Körper ausgebildet sein. Die Dichteinrichtung ist vorzugsweise eine statische Dichtung. Der Dichtspalt kann sich entlang aneinander angrenzender Kanten des ersten und des zweiten Körpers erstrecken. Die Dichteinrichtung weist vorzugsweise eine entlang des Dichtspalts, insbesondere parallel zu dem Dichtspalt, orientierte Haupterstreckungsrichtung auf.

Ein Quotient zwischen der Länge der Dichteinrichtung, insbesondere des Dichtteils, entlang der Haupterstreckungsrichtung und der Breite der Dichteinrichtung, insbesondere des Dichtteils, senkrecht zu der Haupterstreckungsrichtung, insbesondere parallel zu einer Breite des Dichtspalts, beträgt vorzugsweise mindestens 2, insbesondere mindestens 5, insbesondere mindestens 10, insbesondere mindestens 20, insbesondere mindestens 50, insbesondere mindestens 100, und/oder maximal 500.

Die Länge der Dichteinrichtung, insbesondere des Dichtteils, liegt vorzugsweise in einem Bereich von 0,1 m bis 20 m, insbesondere von 1 m bis 10 m, insbesondere von 2 m bis 5 m.

Die Breite der Dichteinrichtung, insbesondere parallel zu der Breite des Dichtspalts, liegt vorzugsweise in einem Bereich von 20 mm bis 200 mm, insbesondere von 40 mm bis 150 mm, insbesondere von 60 mm bis 120 mm.

Eine Dicke der Dichteinrichtung, insbesondere des Dichtteils, liegt vorzugsweise in einem Bereich von 1 mm bis 30 mm, insbesondere von 2 mm bis 20 mm, insbesondere von 3 mm bis 10 mm, insbesondere von 4 mm bis 6 mm.

Das Dichtteil weist vorzugsweise, insbesondere ohne das mindestens eine erste Gegen-Verbindungsmittel, einen plattenförmigen Bereich auf. Der plattenförmige Bereich weist vorzugsweise eine konstante Dicke auf, insbesondere in einem Bereich von 1 mm bis 6 mm, insbesondere von 2 mm bis 4 mm.

Vorzugsweise umfasst das Dichtteil ein gummielastisches Material, insbesondere ein thermoplastisches Elastomer und/oder ein Kautschukmaterial und/oder ein Silikonmaterial und/oder ein brandschutzsicheres Material, insbesondere entsprechend einer Brandschutznorm, insbesondere gemäß EN 45545-2, insbesondere besteht es daraus. Das Dichtteil kann die Form eines Extrusionsprofils, insbesondere eines Knochenprofils aufweisen. Insbesondere ist das Dichtteil in einem Extrusionsverfahren hergestellt. Vorzugsweise umfasst das Dichtteil Silikonkautschuk und/oder ein faserverstärktes Material, insbesondere ein gewebeverstärktes Material, insbesondere besteht es daraus.

Das Dichtteil weist vorzugsweise ein Material mit einer Härte in einem Bereich von 5 Shore-A bis 200 Shore-A, insbesondere von 10 Shore-A bis 150 Shore-A, insbesondere von 20 Shore-A bis 100 Shore-A, insbesondere von 40 Shore-A bis 80 Shore-A, und/oder mit einer Steifigkeit in einem Bereich von 1 MPa bis 200 MPa, insbesondere von 5 MPa bis 150 MPa, insbesondere von 10 MP bis 100 MPa, insbesondere von 20 MPa bis 80 MPa, insbesondere von 40 MPa bis 60 MPa, auf, insbesondere besteht es daraus.

Die Dichteinrichtung, insbesondere das Dichtteil, weisen vorzugsweise ein gegenüber dynamischer Belastung und/oder gegenüber UV-Strahlung und/oder gegenüber Wasser und/oder über der Zeit, beständiges Material auf, insbesondere besteht die Dichteinrichtung, insbesondere das Dichtteil, daraus.

Das erste Basisteil und/oder das erste Kopplungsteil weisen vorzugsweise ein Metall, insbesondere Aluminium, und/oder einen Kunststoff, insbesondere Polyamid und/oder Acrylnitril-Butadien-Styrol und/oder Polyethylen, auf, insbesondere bestehen diese daraus. Das erste Basisteil und/oder das erste Kopplungsteil weisen vorzugsweise die Form eines Extrusionsprofils auf. Das erste Basisteil und/oder das erste Kopplungsteil können in einem Extrusionsverfahren, insbesondere in einem Strangpressverfahren hergestellt sein.

Vorzugsweise ist die Dichteinrichtung dazu ausgebildet, zwei im wesentlichen parallele Oberflächen des ersten und des zweiten Körpers miteinander zu verbinden, insbesondere zwischen denen sich der Dichtspalt erstreckt. Insbesondere kann die Dichteinrichtung zum Verbinden mit den im wesentlichen parallelen Oberflächen ausgebildet sein. Die beiden Oberflächen der beiden Körper weisen vorzugsweise einen Winkel zueinander von maximal 30°, insbesondere maximal 20°, insbesondere maximal 10°, insbesondere maximal 5°, auf.

Gemäß einem Aspekt der Erfindung ist das erste Verbindungsmittel des ersten Kopplungsteils zum Verbinden mit unterschiedlichen Dichtteilen, insbesondere mit Dichtteilen unterschiedlicher Breite, ausgebildet. Hierdurch wird vorteilhaft erreicht, dass zum Abdichten unterschiedlicher Dichtspalte, insbesondere mit unterschiedlicher Breite, jeweils passende Dichtteile verwendet werden können. Die Dichteinrichtung ist somit besonders flexibel einsetzbar.

Vorzugsweise ist die Dichteinrichtung nachrüstbar, insbesondere zum Ersatz und/oder zum Ergänzen bestehender Dichtungen, insbesondere von Dichtfugen, ausgebildet. Die Dichteinrichtung ist vorzugsweise derart ausgebildet, dass diese beabstandet zu dem Dichtspalt an dem ersten und/oder dem zweiten Körper anbringbar ist, insbesondere in einem Abstand in einem Bereich von 0,5 mm bis 10 mm, insbesondere von 1 mm bis 5 mm, insbesondere von 2 mm bis 4 mm, zu einem Dichtspalt. Die Dichteinrichtung kann zusätzlich zu bestehenden Dichteinrichtungen anderen Typs verwendet werden, die sich in dem Dichtspalt erstrecken.

Gemäß einem, insbesondere unabhängigen, Aspekt der Erfindung, kann das dichte Verbinden mit dem ersten Körper und/oder mit dem zweiten Körper derart erfolgen, dass zunächst das erste Basisteil mit diesen verbunden wird. Anschließend wird vorzugsweise das Dichtteil mittels des Kopplungsteils an dem ersten Basisteil angebracht. Vorzugswiese wird das Dichtteil mit dem ersten Kopplungsteil verbunden, bevor das Kopplungsteil mit dem ersten Basisteil verbunden wird. Vorteilhaft wird hierdurch erreicht, dass das erste Basisteil besonders präzise mit dem ersten Körper und/oder dem zweiten Körper verbunden werden kann, ohne, dass das Dichtteil und/oder das erste Kopplungsteil ein Montagehindernis bilden und/oder dass eine auf das Dichtteil auszuübende Vorspannkraft die Montage des ersten Basisteils erschweren würde.

Auf das Dichtteil wirkt vorzugsweise eine Vorspannkraft, insbesondere in einer Dichtanordnung. In einer Montageanordnung liegt das Dichtteil vorzugsweise vorspannkraftfrei vor. Die Vorspannkraft gewährleistet vorteilhaft, dass die Dichtwirkung zuverlässig gewährleistet wird, insbesondere auch dann, wenn sich der Dichtspalt, insbesondere aufgrund von dynamischen Kräften bei der Gleisbearbeitung und/oder aufgrund von Wärmedehnung, insbesondere aufgrund Sonneneinstrahlung, und/oder aufgrund von Kräften beim Befahren des Gleises, verändert.

Gemäß einem Aspekt der Erfindung kann das Dichtteil mit dem zweiten Körper verbunden, insbesondere an diesem angebracht sein, insbesondere den zweiten Körper unmittelbar kontaktierend an diesem angebracht sein.

Eine Dichteinrichtung nach Anspruch 2 gewährleistet das dichte Verbinden des erstens Körpers mit dem zweiten Körper, insbesondere in der Dichtanordnung, in besonders zuverlässiger Weise. Das erste Basisteil kann eine Anlagefläche zum Kontaktieren des Dichtteils, insbesondere eine Spannfläche zum Verspannen des Dichtteils mit dem ersten Basisteil, aufweisen. Insbesondere ist das Dichtteil, insbesondere in der Dichtanordnung, gegen den Dichtkontaktabschnitt verspannt. Vorzugsweise besteht eine dichte Verbindung, insbesondere unmittelbar, zwischen dem ersten Basisteil und dem Dichtteil und/oder dem ersten Körper.

Eine Dichteinrichtung nach Anspruch 3 ist besonders wirtschaftlich herstellbar und montierbar sowie flexibel einsetzbar. Die reversibel lösbare Verbindung ist vorzugsweise werkzeugfrei herstellbar und/oder lösbar. Das Dichtteil ist vorzugsweise reversibel mit dem Kopplungsteil verbindbar. Es können unterschiedliche Dichtteile, insbesondere unterschiedlicher Breite, mit dem Kopplungsteil verbunden werden. Dichtspalte unterschiedlicher Breite sind somit mit der Dichteinrichtung abdichtbar. Die reversibel lösbare Verbindung zwischen dem ersten Kopplungsteil und dem Basisteil gewährleistet vorteilhaft, dass die Dichteinrichtung einfach montierbar und/oder überprüfbar, insbesondere einfach Instand zu halten, ist.

Eine Dichteinrichtung nach Anspruch 4 gewährleistet das dichte Verbinden des ersten Körpers mit dem zweiten Körper in besonders zuverlässiger und robuster Weise. Vorzugsweise wirken das erste Basisteil und das erste Kopplungsteil und/oder das Dichtteil derart zusammen, dass das erste Kopplungsteil auf das Dichtteil in der Art eines Spannhebels wirkt. Vorzugsweise weist das zweite Verbindungsmittel ein erstes Verbindungselement zum Verbinden mit dem ersten Basisteil auf. Das erste Verbindungselement kann als Hebelbasis, insbesondere als Hebellager zum Ausbilden eines Hebelgelenks, mit dem ersten Basisteil zusammenwirken. Ein Verhältnis zwischen der maximalen Erstreckung des ersten Kopplungsteils ausgehend von dem ersten Verbindungselement und dem Abstand zwischen dem ersten Verbindungselement und dem ersten Verbindungsmittel, insbesondere in einer Ebene orthogonal zu einer Längserstreckung des Dichtspalts, beträgt vorzugsweise mindestens 2:1, insbesondere mindestens 3:1, insbesondere mindestens 4:1, insbesondere mindestens 5: 1. Hierdurch wird vorteilhaft erreicht, dass das Dichtelement einfach, insbesondere über eine große Länge des Dichtspalts, mit einer ausreichend hohen Vorspannkraft, insbesondere bei geringem Krafteinsatz, vorspannbar ist. Insbesondere ist die auf das Dichtteil aufbringbare Vorspannkraft größer als eine zum Bewirken der Vorspannkraft erforderliche Betätigungskraft.

Vorzugsweise weist das Dichtteil im Bereich des Dichtkontaktabschnitts einen Knick auf. Das Dichtteil ist vorzugsweise, insbesondere aufgrund der Vorspannkraft, über den Dichtkontaktabschnitt gespannt.

Die Vorspannkraft wirkt vorzugsweise zwischen dem Basisteil und dem Dichtteil, insbesondere unmittelbar an dem Dichtkontaktabschnitt und/oder mittelbar über das Kopplungsteil. Die Vorspannkraft ist vorzugsweise eine auf das plattenförmige Dichtteil wirkende Normalkraft. Im Bereich des Dichtkontaktabschnitts kann eine Querkraft auf das Dichtteil wirken. Vorzugsweise ist das erste Verbindungsmittel zum Übertragen ausschließlich einer Normalkraft auf das Dichtteil ausgebildet.

Eine Dichteinrichtung nach Anspruch 5 ist besonders robust im Betrieb und einfach montierbar. Vorzugsweise liegt zwischen der Montageanordnung, in welcher das Dichtteil vorspannkraftfrei vorliegt, und der Dichtanordnung, in welcher die Dichteinrichtung montiert ist und eine Vorspannkraft auf das Dichtteil wirkt, ein Kniepunkt. Hierdurch wird vorteilhaft erreicht, dass sich das als Spannhebel ausgebildete Kopplungsteil in der Dichtanordnung in einer stabilen Anordnung befindet. Ein derartiger Kniepunkt wird auch als Totpunkt bezeichnet. Insbesondere wird der Kniepunkt bei der Drehbewegung des ersten Kopplungsteils um das erste Verbindungselement zum Spannen des Dichtteils überschritten.

Eine Dichteinrichtung nach Anspruch 6 ist besonders wirtschaftlich herstellbar und robust im Betrieb. Die Formschlussverbindung ist vorzugsweise reversibel lösbar ausgebildet. Die, insbesondere zwischen dem Dichtteil und dem ersten Kopplungsteil, ausgebildete, Formschlussverbindung, gewährleistet das Verbinden des Dichtteils mit dem ersten Körper in einer mechanisch besonders beständigen Weise. Im Unterschied zu einer stoffschlüssigen Verbindung, insbesondere einer Verklebung, kann eine besonders gleichmäßige Kraftübertragung über ein derartiges Verbindungsmittel erfolgen.

Eine Dichteinrichtung nach Anspruch 7 ist besonders wirtschaftlich herstellbar und robust im Betrieb. Vorzugsweise ist die Keder-Verbindung zwischen dem Dichtteil und dem ersten Kopplungsteil ausgebildet. Das Dichtteil kann einen Keder aufweisen und das erste Verbindungsmittel kann als Kedernut ausgebildet sein, oder andersherum. Eine derartige, als Keder-Verbindung ausgebildete Formschlussverbindung ist wirtschaftlich montierbar und robust im Betrieb.

Eine Dichteinrichtung nach Anspruch 8 ist besonders wirtschaftlich montierbar, instandhaltbar und robust im Betrieb. Die Rastverbindung ist vorzugsweise reversibel lösbar ausgebildet. Die Rastverbindung ist vorzugsweis dazu ausgebildet, das als Spannhebel ausgebildete erste Kopplungsteil in der Dichtanordnung zu arretieren. Die Rastverbindung kann zwischen dem ersten Kopplungsteil und dem ersten Basisteil ausgebildet sein. Insbesondere kann das zweite Verbindungsmittel ein zweites Verbindungselement zum Ausbilden der Rastverbindung aufweisen. Das erste Kopplungsteil, insbesondere das zweite Verbindungselement, kann ein Rastmittel aufweisen. Das erste Basisteil kann ein Gegen-Rastmittel aufweisen. Vorzugsweise weist das Rastmittel mindestens eine Rastaussparung auf und das Gegen-Rastmittel weist mindestens einen Rastvorsprung auf, oder andersherum. Das zweite Verbindungselement kann zum Herstellen einer Nut-Feder-Verbindung mit dem ersten Basisteil ausgebildet sein. Insbesondere kann das zweite Verbindungselement als Feder ausgebildet sein und das erste Basisteil kann eine entsprechende Nut aufweisen, oder andersherum. Das Rastmittel ist vorzugsweise an der Feder angeordnet. Das Gegen-Rastmittel kann an der Nut angeordnet sein. Vorzugsweise ist das zweite Verbindungselement beabstandet zu dem ersten Verbindungselement angeordnet.

Eine Dichteinrichtung nach Anspruch 9 ist besonders wirtschaftlich herstellbar. Das erste Basisteil und/oder das erste Kopplungsteil sind vorzugsweise gerade extrudiert. Das erste Basisteil und/oder das erste Kopplungsteil weisen vorzugsweise Aluminium, insbesondere eine Aluminium-Legierung, auf, insbesondere bestehen diese daraus.

Eine Dichteinrichtung nach Anspruch 10 ist besonders wirtschaftlich montierbar und robust im Betrieb. Die Klebverbindung kann einen Einkomponentzen Klebstoff oder einen Mehrkomponenten-Klebstoff aufweisen, insbesondere einen Epoxid-Klebstoff, und/oder einen gummielastischen Klebstoff, insbesondere Nitril-Kautschuk und/oder Polyurethan, insbesondere daraus bestehen. Die Bolzenverbindung kann eine Nietverbindung und/oder eine Schraubverbindung umfassen, insbesondere daraus bestehen. Vorteilhaft wird hierdurch erreicht, dass die Dichteinrichtung zum Nachrüsten an bestehenden Vorrichtungen, insbesondere Gleisbauvorrichtungen, geeignet ist.

Eine Dichteinrichtung nach Anspruch 11 ist besonders flexibel einsetzbar und robust im Betrieb. Vorzugsweise weist die Dichteinrichtung ein dem ersten Kopplungsteil entsprechendes zweites Kopplungsteil und/oder ein dem ersten Basisteil entsprechendes zweites Basisteil auf. Insbesondere kann die Dichteinrichtung bezüglich einer Mittellängsebene entlang des Dichtteils und/oder durch den Dichtspalt symmetrisch ausgebildet sein. Das erste Kopplungsteil und das zweite Kopplungsteil und/oder das erste Basisteil und das zweite Basisteil können als Gleichteile, insbesondere aus demselben Halbzeug, insbesondere aus demselben Strangpressprofil, hergestellt sein. Vorzugsweise ist das zweite Basisteil zum Befestigen an dem zweiten Körper ausgebildet. Das zweite Kopplungsteil kann, insbesondere entsprechend dem ersten Kopplungsteil, ein erstes Verbindungsmittel zum Verbinden mit dem Dichtteil aufweisen und ein zweites Verbindungsmittel zum Verbinden mit dem zweiten Basisteil. Das Dichtteil kann ein zweites Gegen-Verbindungsmittel zum Verbinden mit dem ersten Verbindungsmittel des zweiten Kopplungsteils aufweisen. Vorzugsweise entspricht das zweite Gegen-Verbindungsmittel dem ersten Gegen-Verbindungsmittel.

Eine Dichteinrichtung nach Anspruch 12 ist besonders robust im Betrieb. Das erste Kopplungsteil kann eine Dichtzunge zum dichten Kontaktieren des ersten Körpers aufweisen. Die Dichtzunge kann zum federelastischen Kontaktieren des ersten Körpers ausgebildet sein. Unter der ersten Verbindungsfläche wird diejenige Fläche verstanden, über welche das erste Basisteil den ersten Körper kontaktiert.

Vorzugsweise überlappen das ersten Kopplungsteil, das Dichtteil und das zweite Kopplungsteil in einer Orthogonalprojektion auf die erste Verbindungsfläche und/oder auf eine zweite Verbindungsfläche des zweiten Basisteils das erste Basisteil, den Dichtspalt und das zweite Basisteil.

Eine weitere Aufgabe der Erfindung besteht darin, eine verbesserte Vorrichtung zu schaffen.

Diese Aufgabe wird durch eine Vorrichtung mit den Merkmalen des Anspruchs 13 gelöst. Die Vorteile der Vorrichtung entsprechen den Vorteilen der vorstehend beschriebenen Dichteinrichtung. Vorzugsweise ist die Vorrichtung mit mindestens einem der Merkmale weitergebildet, die vorstehend in Zusammenhang mit der Dichteinrichtung erläutert sind. Die Vorrichtung kann eine immobile Vorrichtung, insbesondere ein Infrastrukturelement, insbesondere eines Gebäudes, oder eine mobile Vorrichtung, insbesondere eine Gleisbauvorrichtung, insbesondere ein Gleisbaufahrzeug, sein. Der erste Körper und/oder der zweite Körper sind vorzugsweise aneinander angrenzende Außenwände, insbesondere ein Dach und/oder eine Seitenwand und/oder eine Bodenwand, der Vorrichtung. Zwischen dem ersten Körper und dem zweiten Körper liegt vorzugsweise ein Dichtspalt vor, welcher mit der Dichteinrichtung abgedichtet ist.

Die mobile Vorrichtung kann einen Fahrwagen, insbesondere einen Gleisfahrwagen zum Verlagern auf Schienen aufweisen. Derartige Gleisfahrzeuge werden beim Befahren der Schienen mit dynamischen Lasten beaufschlagt. Insbesondere können zwischen dem ersten und dem zweiten Körper dynamische Lasten wirken, die zu einer Bewegung des ersten Körpers relativ zu dem zweiten Körper führen. Der Dichtspalt ist folglich in seiner Form veränderlich. Die Dichteinrichtung gewährleistet trotz entsprechender Relativbewegungen eine zuverlässig und dauerhaft dichte Verbindung zwischen dem ersten und dem zweiten Körper.

Eine Vorrichtung nach Anspruch 14 ist besonders robust im Betrieb. Die Gleisbauvorrichtung kann ein Schleifaggregat und/oder ein Schraubaggregat und/oder ein Hebe- und Richtaggregat und/oder ein Schweißaggregat und/oder ein Stopfaggregat aufweisen. Vorzugsweise ist die Gleisbauvorrichtung eine Gleisstopfvorrichtung. Bei derartigen Gleisbauvorrichtungen können starke dynamische Kräfte zwischen dem ersten Körper und dem zweiten Körper wirken, insbesondere in Reaktion auf das Bearbeiten des Gleises, insbesondere mit resultierenden Relativbewegungen zwischen dem ersten Körper und dem zweiten Körper. Die Dichteinrichtung gewährleistet ein zuverlässig dichte Verbindung zwischen dem ersten und dem zweiten Körper.

Eine Vorrichtung nach Anspruch 15 ist besonders robust im Betrieb. Vorzugsweise sind der erste Körper und/oder der zweite Körper eine Außenwand des Fahrwagens. Beispielsweise können der erste Körper und/oder der zweite Körper eine Dachwand und/oder eine Seitenwand und/oder eine Bodenwand der Vorrichtung, insbesondere der mobilen Vorrichtung, insbesondere des Fahrwagens sein.

Gemäß einem Aspekt der Erfindung überlappt das Dichtteil einen Knick des Dichtspalts unterbrechungsfrei. Ein derartiger Knick des Dichtspalts kann beispielsweise als Knick innerhalb mindestens eines der als Außenwände ausgebildeten Körper vorliegen, insbesondere als Knick über einer Außenwand, die eine Dachwand und eine Seitenwand, insbesondere in einstückiger Bauweise, umfasst.

Die Haupterstreckungsrichtung der Dichteinrichtung kann horizontal, insbesondere in Schienenlängsrichtung und/oder in Schienenquerrichtung, und/oder vertikal und/oder schräg zu diesen Richtungen orientiert sein. Für jede Orientierung bietet die Dichteinrichtung ein zuverlässig dichtes Verbinden des ersten Körpers mit dem zweiten Körper sowie eine wirtschaftliche Herstellbarkeit einer entsprechend dichten Verbindung.

Weitere Merkmale, Einzelheiten und Vorteile der Erfindung ergeben sich aus der nachfolgenden Beschreibung eines Ausführungsbeispiels anhand der Figuren. Es zeigen:
- Fig. 1: Eine schematische Darstellung einer Vorrichtung, insbesondere einer Gleisbauvorrichtung, mit einem ersten Körper, einem zweiten Körper und einer Dichteinrichtung zum dichten Verbinden des ersten Körpers mit dem zweiten Körper,
- Fig. 2: eine perspektivische Darstellung der Dichteinrichtung in der Fig. 1, wobei ein sich zwischen dem ersten und dem zweiten Körper erstreckender Dichtspalt einen Knick aufweist,
- Fig. 3: eine Schnittdarstellung entlang der Schnittlinie III-III in der Fig. 2, wobei die Vorrichtung ein erstes und ein zweites Basisteil, ein erstes und ein zweites Kopplungsteil und ein Dichtteil aufweist,
- Fig. 4: das erste Basisteil in der Fig. 3 weiter im Detail, bzw.
- Fig. 5: das erste Kopplungsteil in der Fig. 3 weiter im Detail.

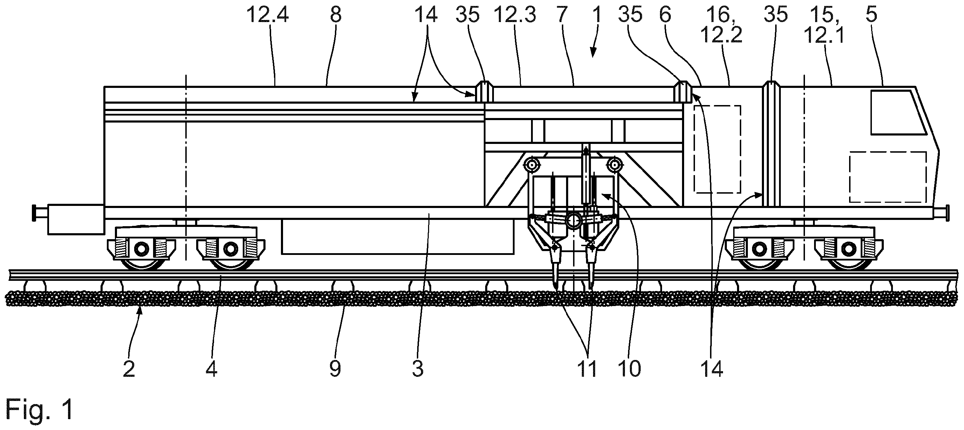

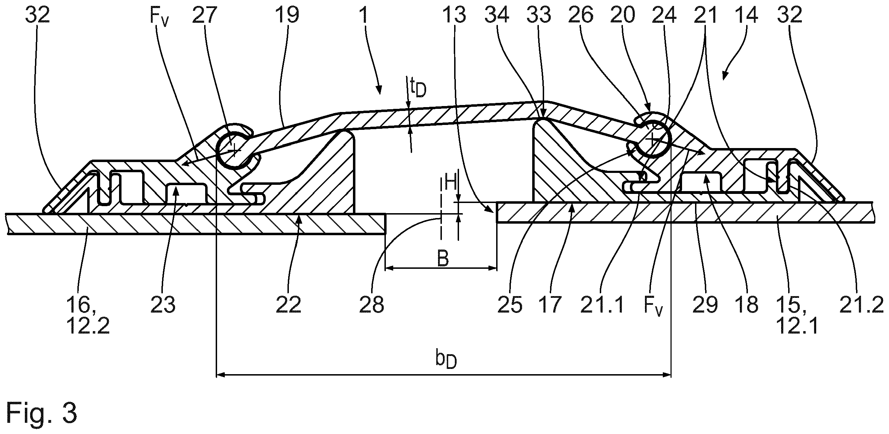

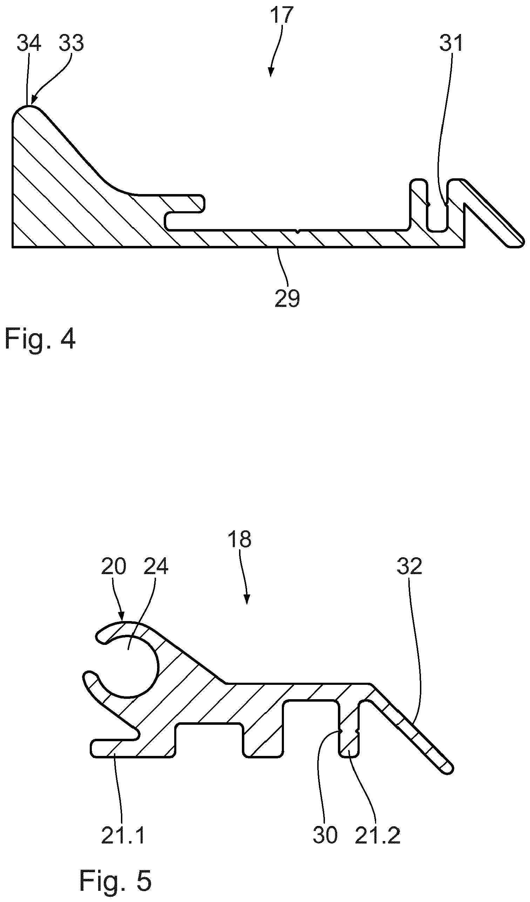

Anhand der Fig. 1 bis Fig. 5 ist ein Ausführungsbeispiel einer Vorrichtung 1 beschrieben. Die Vorrichtung 1 ist vorzugsweise eine Gleisbauvorrichtung 1 zum Bearbeiten eines Gleises 2. Die Vorrichtung 1 kann einen Fahrwagen 3 zum Befahren des Gleises 2, insbesondere von Gleisschienen 4, aufweisen.

Der Fahrwagen 3 umfasst einen Fahrsteuerabschnitt 5, einen Bearbeitungssteuerabschnitt 6, einen Gleisbearbeitungsabschnitt 7 und einen Versorgungsabschnitt 8. Der Fahrsteuerabschnitt 5 umfasst insbesondere eine Fahrsteuerkabine für einen Fahrzeugführer. Der Bearbeitungssteuerabschnitt 6 umfasst insbesondere eine Bearbeitungssteuerkabine für einen Bearbeitungsmaschinenführer. Die Vorrichtung 1 ist insbesondere eine Gleisstopfmaschine zum Verdichten eines Schotterbetts 9 des Gleises 2.

Die Vorrichtung 1 weist zum Bearbeiten des Gleises 2 mindestens ein Bearbeitungsaggregat 10, insbesondere ein Stopfaggregat, auf. Das Bearbeitungsaggregat 10 umfasst mindestens ein Gleiskontaktmittel 11 zum mechanischen Einwirken auf das Gleis 2, insbesondere mehrere Stopfpickel zum Verdichten des Schotterbetts 9.

Die Abschnitte 5, 6, 7, 8 der Vorrichtung 1 weisen jeweils Außenwände 12.1 - 12.4 auf. Die Außenwände 12.1 - 12.4 können jeweils einteilig oder mehrteilig ausgebildet sein. Die Außenwände 12.1, 12.2 umfassen Kabinendächer.

Aneinander angrenzende Außenwände 12.1 - 12.4 sind vorzugsweise bündig, insbesondere flächenbündig und/oder plan, aneinander angeordnet. Mindestens eine der aneinander angrenzenden Außenwände 12.1 - 12.4 kann als Blechwand ausgebildet sein. Die aneinander angrenzenden Außenwände 12.1 - 12.4 können in der Form einer Stoßverbindung aneinander angrenzen.

Zwischen aneinander angrenzenden Außenwänden 12.1 - 12.4 liegt ein Dichtspalt 13 vor. Die zu den Dichtspalten 13 führenden Trennstellen zwischen den Außenwänden 12.1 - 12.4 ergeben sich aus der mit zunehmender Größe der Außenwände 12.1 - 12.4 schwierigeren Handhabbarkeit, insbesondere beim Fügen, und Herstellbarkeit, insbesondere mit geringen Toleranzen, aus der modularen Bauweise der Vorrichtung 1 und/oder aus dem Erfordernis, die Abschnitte 5, 6, 7, 8 der Vorrichtung 1 zumindest teilweise mechanisch voneinander zu entkoppeln. Insbesondere aufgrund mechanischer Lasten kann der mindestens eine Dichtspalt 13, insbesondere hinsichtlich einer Spaltbreite B und/oder einer Spaltstufenhöhe H, insbesondere ortsabhängig und/oder zeitabhängig, variieren.

Die Vorrichtung 1 weist mindestens eine, insbesondere mehrere Dichteinrichtungen 14 zum dichten Verbinden eines ersten Körpers 15 und eines zweiten Körpers 16 auf. Der ersten Körper 15 ist vorzugsweise durch eine der Außenwände 12.1 - 12.4 gebildet. Der zweite Körper 16 ist vorzugsweise durch eine andere, an den ersten Körper 15 angrenzende Außenwand 12.1 - 12.4 gebildet. Die Dichteinrichtung 14 ist insbesondere zum Abdichten des Dichtspalts 13 zwischen dem ersten Körper 15 und dem zweiten Körper 16, insbesondere gegenüber Flüssigkeit, insbesondere Wasser, und/oder Festkörpern, insbesondere Staub, ausgebildet.

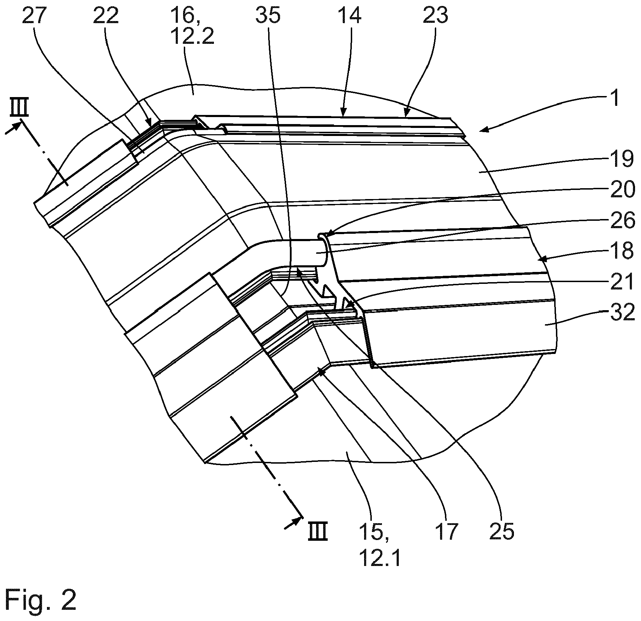

Anhand der Fig. 2 bis Fig. 5 ist die Dichteinrichtung 14 weiter im Detail beschrieben. Die Dichteinrichtung 14 weist ein erstes Basisteil 17, ein erstes Kopplungsteil 18 und ein Dichtteil 19 auf. Das erste Basisteil 17 ist zum Befestigen an dem ersten Körper 15 ausgebildet. Das erste Kopplungsteil 18 ist zum Verbinden des Dichtteils 19 mit dem ersten Basisteil 17 ausgebildet.

Das erste Kopplungsteil 18 weist ein erstes Verbindungsmittel 20 zum Verbinden mit dem Dichtteil 19 und ein zweites Verbindungsmittel 21 zum Verbinden mit dem ersten Basisteil 17 auf.

Ferner umfasst die Dichteinrichtung 14 ein zweites Basisteil 22 und ein zweites Kopplungsteil 23. Das zweite Basisteil 22 entspricht dem ersten Basisteil 17, insbesondere sind diese identisch ausgebildet. Das zweite Kopplungsteil 23 entspricht dem ersten Kopplungsteil 18, insbesondere sind diese identisch ausgebildet.

Das erste Verbindungsmittel 20 ist dazu ausgebildet, eine Formschlussverbindung, insbesondere eine Keder-Verbindung, mit dem Dichtteil 19 zu bewirken. Das erste Verbindungsmittel 20 ist insbesondere in der Form einer Kedernut 24 ausgebildet. Das Dichtteil 19 weist ein erstes Gegen-Verbindungsmittel 25 zum Verbinden mit dem ersten Kopplungsteil 18, insbesondere einen Keder 26 auf.

Das Dichtteil 19 weist ein zweites Gegen-Verbindungsmittel 27 zum Verbinden mit dem zweiten Kopplungsteil 23 auf. Das zweite Gegen-Verbindungsmittel 27 ist entsprechend dem ersten Gegen-Verbindungsmittel 25, insbesondere identisch mit diesem, insbesondere als Keder, ausgebildet.

Die Dichteinrichtung 14, insbesondere das Dichtteil 19 bzw. das erste und das zweite Kopplungsteil 18, 23 bzw. das erste und das zweite Basisteil 17, 22, sind vorzugsweise symmetrisch ausgebildet, insbesondere bezüglich des Dichtspalts 13, insbesondere einer parallel zu dem Dichtspalt 13 und senkrecht zu einer ersten Verbindungsfläche 29 orientierten Spaltebene 28.

Das zweite Verbindungsmittel 21 ist dazu ausgebildet, eine Formschlussverbindung, insbesondere eine Rastverbindung, zwischen dem ersten Kopplungsteil 18 und dem ersten Basisteil 17 herzustellen.

Das zweite Verbindungsmittel 21 weist ein erstes Verbindungselement 21.1 und ein zweites Verbindungselement 21.2 auf. Das erste Verbindungselement 21.1 und das zweite Verbindungselement 21.2 sind zum Übertragen unterschiedlich orientierter Kraftkomponenten zwischen dem ersten Basisteil 17 und dem ersten Kopplungsteil 18 ausgebildet.

Die Dichteinrichtung 14 ist zum Verbinden mit dem ersten Körper 15 in der ersten Verbindungsfläche 29 ausgebildet. Insbesondere kontaktiert das erste Basisteil 17 den ersten Körper 15 an der ersten Verbindungsfläche 29. Die erste Verbindungsfläche 29 ist vorzugsweise eben ausgebildet. Die erste Verbindungsfläche 29 kann eine Außenfläche der entsprechenden Außenwand 12.1 - 12.4 sein.

Das erste Verbindungselement 21.1 ist, insbesondere ausschließlich, zum Übertragen von senkrecht zu der ersten Verbindungsfläche 29 orientierten Kräften ausgebildet. Hierzu ist das erste Verbindungselement 21.1 zum Bewirken einer Nut-Feder-Verbindung mit dem ersten Basisteil 17 ausgebildet. Insbesondere ist das erste Verbindungselement 21.1 in der Form einer sich parallel zu der ersten Verbindungsfläche 29 erstreckenden Feder ausgebildet. Das erste Basisteil 17 weist eine entsprechende Nut auf.

Das zweite Verbindungselement 21.2 ist, insbesondere ausschließlich, zum Übertragen von parallel zu der ersten Verbindungsfläche 29 orientierten Kräften zwischen dem ersten Kopplungsteil 18 und dem ersten Basisteil 17 ausgebildet. Hierzu ist das zweite Verbindungselement 21.2 zum Bewirken einer Nut-Feder-Verbindung mit dem ersten Basisteil 17 ausgebildet. Insbesondere weist das zweite Verbindungselement 21.2 eine senkrecht zu der ersten Verbindungsfläche 29 orientierte Feder auf. Das erste Basisteil 17 weist eine entsprechende Nut auf.

Zum Ausbilden einer Rastverbindung umfasst das zweite Verbindungselement 21.2 ein Rastmittel 30, insbesondere zwei Rastaussparungen. Das erste Basisteil 17 weist ein entsprechendes Gegen-Rastmittel 31, insbesondere zwei Rastvorsprünge, auf.

Das erste Kopplungsteil 18 weist eine Dichtzunge 32 auf. Die Dichtzunge 32 ist zum dichtenden Kontaktieren des ersten Basisteils 17 und/oder des ersten Körpers 15 ausgebildet. Vorzugsweise ist die Dichtzunge 32 als Federzunge ausgebildet.

Das erste Basisteil 17 umfasst einen Dichtkontaktabschnitt 33 zum dichten Kontaktieren des Dichtteils 19. Der Dichtkontaktabschnitt 33 umfasst eine Spannfläche 34, mit welcher das Dichtteil 19, insbesondere in der Dichtanordnung, dichtend verspannt ist. Das Dichtteil 19 ist in der Dichtanordnung gegen die Spannfläche 34 vorgespannt.

Das erste Kopplungsteil 18 ist mit dem Dichtteil 19 und dem ersten Basisteil 17 reversibel lösbar, insbesondere werkzeuglos, verbunden. Das erste Kopplungsteil 18 wirkt mit dem ersten Basisteil 17 in der Form eines Spannhebels zum Bewirken einer Vorspannkraft auf das Dichtteil 19 zusammen.

In einer Montageanordnung, in welcher das erste Verbindungselement 21.1 in Eingriff mit dem ersten Basisteil 17 steht und in welcher das zweite Verbindungselement 21.2 außer Eingriff mit dem ersten Basisteil 17 steht, ist das Dichtteil 19 nicht vorgespannt.

In der Dichtanordnung, in welcher das erste und das zweite Verbindungselement 21.1, 21.2 mit dem ersten Basisteil 17 verbunden sind, ist das Dichtteil 19 vorgespannt. Das erste Kopplungsteil 18 und das erste Basisteil 17 sind derart ausgebildet, dass beim Verlagern des ersten Kopplungsteils 18 zwischen der Dichtanordnung und der Montageanordnung ein Kniepunkt zu überwinden ist, sodass das erste Kopplungsteil 18 in der Dichtanordnung eine stabile Lage aufweist.

Das Dichtteil 19 weist eine Breite b_{D} von 50 mm auf. Die Spaltbreite B beträgt im Mittel 15 mm. Die Spaltstufenhöhe H beträgt 2 mm. Eine Dicke t_{D} des Dichtteils 19 beträgt 3 mm.

Das Dichtteil 19 umfasst ein gummielastisches Material, insbesondere ein brandschutzsicheres Material, insbesondere gemäß einer Brandschutznorm, insbesondere der Brandschutznorm EN 45545-2, insbesondere ein Silikonmaterial, insbesondere einen Silikonkautschuk, und/oder ein gewebeverstärktes Material, insbesondere besteht das Dichtteil 19 daraus. Das Dichtteil 19 ist vorzugsweise in einem Extrusionsverfahren, insbesondere in einem Strangpressverfahren, hergestellt

Das erste Basisteil 17 und/oder das erste Kopplungsteil 18 und/oder das zweite Basisteil 22 und/oder das zweite Kopplungsteil 23 sind vorzugsweise in einem Extrusionsverfahren, insbesondere einem Strangpressverfahren, hergestellt und/oder umfassen einen Kunststoff und/oder ein Metall, insbesondere Aluminium, insbesondere bestehen diese daraus.

Das erste Basisteil 17 ist mit dem ersten Körper 15, insbesondere in dem Bereich der ersten Verbindungsfläche 29, stoffschlüssig verbunden, insbesondere verklebt. Das zweite Basisteil 22 ist mit dem zweiten Körper 16 stoffschlüssig verbunden, insbesondere verklebt.

In einer Orthogonalprojektion auf die erste Verbindungsfläche 29 überlappen das Dichtteil 19 und das erste Kopplungsteil 18 vollständig das erste Basisteil 17. Insbesondere überlappen das Dichtteil 19, das erste Kopplungsteil 18 und das zweite Kopplungsteil 23 in dieser Orthogonalprojektion vollständig das erste Basisteil 17, das zweite Basisteil 22 und den Dichtspalt 13.

Die Dichteinrichtung 14 ist derart ausgebildet, dass die dichte Verbindung zwischen dem ersten Körper 15 und dem zweiten Körper 16 insbesondere gewährleistet ist bei einer Relativbewegung zwischen dem ersten Körper 15 und dem zweiten Körper 16, insbesondere parallel zu der ersten Verbindungsfläche 29, insbesondere von mindestens 1 mm, insbesondere mindestens 2 mm, insbesondere mindestens 3 mm, und/oder einer Winkeländerung zwischen dem ersten Körper 15 und dem zweiten Körper 16, insbesondere um eine Haupterstreckungsrichtung der Dichteinrichtung 14 und/oder des Dichtspalts 13, von mindestens 5°, insbesondere mindestens 10°, insbesondere mindestens 25°.

Die Dichteinrichtung 14 erstreckt sich vorzugsweise über einen Knick 35 des Dichtspalts 13, insbesondere über einen Knick 35 der aneinander angrenzenden Kanten des ersten Körpers 15 und des zweiten Körpers 16 hinweg. Insbesondere ist das Dichtteil 19 über den Knick 35 des Dichtspalts 13 hinweg unterbrechungsfrei ausgebildet.

Die Funktionsweise der Vorrichtung 1, insbesondere der Dichteinrichtung 14 ist wie folgt:
Bei der Herstellung der Vorrichtung 1 liegen zunächst die Dichtspalte 13 zwischen jeweils benachbarten Außenwänden 12.1 - 12.4, insbesondere der unterschiedlichen Abschnitte 5, 6, 7, 8, vor. Um Verschmutzungen bzw. Flüssigkeit vor dem Eindringen in den jeweiligen Dichtspalt 13 zu hindern, werden die Dichtspalte 13 jeweils mit der Dichteinrichtung 14 abgedichtet.

Das erste Basisteil 17 wird mit dem ersten Körper 15 verklebt. Das zweite Basisteil 22 wird mit dem zweiten Körper 16 verklebt. Die jeweilige Klebverbindung ist vorzugsweise derart ausgebildet, dass zwischen dem jeweiligen Basisteil 17, 22 und dem jeweiligen Körper 15, 16 eine fluiddichte, insbesondere flüssigkeitsdichte, Verbindung vorliegt. Alternativ oder zusätzlich zu einer Verklebung kann das jeweilige Basisteil 17, 22 mit dem jeweiligen Körper 15, 16 mittels einer Bolzenverbindung, insbesondere einer Verschraubung und/oder mittels Niete, verbunden werden.

Das Dichtteil 19 wird mit den beiden Kopplungsteilen 18, 23 verbunden. Hierzu wird der jeweilige Keder 26 in die zugehörige Kedernut 24 des ersten Verbindungsmittels 20 des jeweiligen Kopplungsteils 18, 23 eingeführt.

Mittels des zweiten Verbindungsmittels 21 wird das zweite Kopplungsteil 23 mit dem zweiten Basisteil 22 verbunden. Das erste Kopplungsteil 18 ist noch nicht mit dem ersten Basisteil 17 verbunden. Auf das Dichtteil 19 wirkt keine Vorspannkraft Fv. Die Dichteinrichtung 14 befindet sich in der Montageanordnung.

Zum Verlagern der Dichteinrichtung 14 in die Dichtanordnung wird das erste Verbindungselement 21.1 des zweiten Verbindungsmittels 21 des ersten Kopplungsteils 18 mit dem ersten Basisteil 17 verbunden. Insbesondere wird das als Feder ausgebildete erste Verbindungselement 21.1 an der entsprechenden Nut des ersten Basisteils 17 angesetzt. Das zweite Verbindungselement 21.2 steht außer Eingriff mit dem ersten Basisteil 17. Auf das Dichtteil 19 wirkt weiterhin keine Vorspannkraft Fv.

Das erste Kopplungsteil 18 wird zum Ausüben der Vorspannkraft Fv auf das Dichtteil 19 geschwenkt, insbesondere in Richtung des ersten Basisteils 17, insbesondere derart, dass das zweite Verbindungselement 21.2 in Eingriff mit dem ersten Basisteil 17 gelangt. Das Rastmittel 30 gelangt in Eingriff mit dem Gegen-Rastmittel 31. Dabei bringt das erste Kopplungsteil 18 eine Vorspannkraft Fv auf das Dichtteil 19 auf. Mittels der Rastverbindung zwischen dem Rastmittel 30 und dem Gegen-Rastmittel 31 ist das erste Kopplungsteil 18 an dem ersten Basisteil 17 in der Dichtanordnung arretiert.

Das in der Dichtanordnung vorgespannte Dichtteil 19 ist insbesondere auf die Spannfläche 34 des Dichtkontaktabschnitts 33 des jeweiligen Basisteils 17, 22 vorgespannt. Das Dichtteil 19 liegt damit zuverlässig dicht an den beiden Basisteilen 17, 22 an.

Beim Verlagern des ersten Kopplungsteils 18 zwischen der Montageanordnung und der Dichtanordnung wird ein Kniepunkt überschritten. In der Dichtanordnung befindet sich das erste Kopplungsteil 18, insbesondere bezüglich des ersten Basisteils 17, in einer stabilen Lage. Gleiches gilt für das zweite Kopplungsteil 23. Hierdurch wird die Anordnung des jeweiligen Kopplungsteils 18, 23 zusätzlich gesichert.

Der Dichtspalt 13 ist einerseits abgedichtet über das Dichtteil 19, das die Basisteile 17, 22 an der jeweiligen Spannfläche 34 dicht kontaktiert, die Basisteile 17, 22 und die jeweilige Klebverbindung zu den Körpern 15, 16. Zudem ist der Dichtspalt 13 abgedichtet über das Dichtteil 19, welches mittels der jeweiligen Keder-Verbindung 20 dicht mit dem jeweiligen Kopplungsteil 18, 23 verbunden ist, das jeweilige Kopplungsteil 18, 23 und die jeweilige Dichtzunge 32, welche dicht an dem jeweiligen Körper 15, 16 anliegt. Die Abdichtung des Dichtspalts 13 wird hierdurch besonders zuverlässig gewährleistet.

Die Dichteinrichtung 14 kann gleichermaßen für horizontal oder vertikal oder schräg dazu orientierte Dichtspalte 13 eingesetzt werden. Die Dichteinrichtung 14, insbesondere das Dichtteil 19, kann sich unterbrechungsfrei über einen Knick des Dichtspalts 13 erstrecken. Die Dichteinrichtung 14 ist somit besonders flexibel einsetzbar.

Dadurch, dass das Dichtteil 19 reversibel mit dem jeweiligen Kopplungsteil 18, 23 verbindbar ist, kann das Dichtteil 19, insbesondere hinsichtlich seiner Breite b_{D}, derart gewählt werden, dass die Dichteinrichtung 14 an die Spaltbreite B angepasst ist. Beispielsweise kann aus verschiedenen Dichtteilen 19 mit unterschiedlicher Breite b_{D} gewählt werden, um den jeweils vorliegenden Dichtspalt abhängig von der vorliegenden Spaltbreite B und/oder einer zu erwartenden Änderung der Spaltbreite B, insbesondere aufgrund dynamischer Lasten zwischen dem ersten und dem zweiten Körper 15, 16, im Betrieb zuverlässig abzudichten.

Dadurch, dass das Dichtteil 19 aus einem gummielastischen Material, insbesondere einem Silikonmaterial, hergestellt ist, ist es besonders verschleißfest. Dadurch, dass das erste Verbindungsmittel 20 und/oder das zweite Verbindungsmittel 21 reversibel lösbar, insbesondere werkzeuglos lösbar, ausgebildet sind, ist ein einfacher Austausch des Dichtteils 19, insbesondere eines beschädigten Dichtteils 19, möglich.

Die Dichteinrichtung 14 ist aufgrund der Ausbildung des jeweiligen Kopplungsteils 18, 23 als Spannhebel besonders einfach, insbesondere händisch, insbesondere werkzeuglos, montierbar. Hierdurch kann die Montage der Dichteinrichtung 14 zeiteffizient und wirtschaftlich erfolgen.

Die Dichteinrichtung 14 ermöglicht das dichte Verbinden des ersten Körpers 15 mit dem zweiten Körper 16 in besonders zuverlässiger, robuster und wirtschaftlicher Weise. Eine damit ausgebildet Vorrichtung 1, insbesondere eine Gleisbearbeitungsvorrichtung, insbesondere eine Gleisstopfmaschine, ist besonders wirtschaftlich herstellbar und robust im Betrieb.

## Patentansprüche

1. Dichteinrichtung (14) zum dichten Verbinden eines ersten Körpers (15) mit einem zweiten Körper (16), insbesondere für eine Gleisbauvorrichtung (1), aufweisend
1.1 ein Dichtteil (19),
1.2 ein erstes Basisteil (17) zum Befestigen an dem ersten Körper (15), und
1.3 ein erstes Kopplungsteil (18), mit
1.3.1 einem ersten Verbindungsmittel (20) zum Verbinden mit dem Dichtteil (19), und
1.3.2 einem zweiten Verbindungsmittel (21) zum Verbinden mit dem ersten Basisteil (17).

2. Dichteinrichtung (14) nach Anspruch 1, **dadurch gekennzeichnet, dass** das erste Basisteil (17) einen Dichtkontaktabschnitt (33) zum dichten Kontaktieren des Dichtteils (19) aufweist.

3. Dichteinrichtung (14) nach Anspruch 1 oder 2, **dadurch gekennzeichnet, dass** das erste Verbindungsmittel (20) und/oder das zweite Verbindungsmittel (21) dazu ausgebildet sind, eine reversibel lösbare Verbindung zwischen dem ersten Kopplungsteil (18) und dem Dichtteil (19) und/oder dem ersten Basisteil (17) herzustellen.

4. Dichteinrichtung (14) nach einem der vorstehenden Ansprüche,
**dadurch gekennzeichnet, dass** das erste Kopplungsteil (18) als Spannhebel zum Ausüben einer Vorspannkraft (Fv) auf das Dichtteil (19) ausgebildet ist.

5. Dichteinrichtung (14) nach Anspruch 4, **dadurch gekennzeichnet, dass** der Spannhebel einen Kniepunkt zum Bereitstellen einer stabilen Anordnung des Spannhebels in einer Dichtanordnung aufweist.

6. Dichteinrichtung (14) nach einem der vorstehenden Ansprüche,
**dadurch gekennzeichnet, dass** das erste Verbindungsmittel (20) und/oder das zweite Verbindungsmittel (21) dazu ausgebildet sind, eine Formschlussverbindung zwischen dem ersten Kopplungsteil (18) und dem Dichtteil (19) und/oder dem ersten Basisteil (17) herzustellen.

7. Dichteinrichtung (14) nach Anspruch 6, **dadurch gekennzeichnet, dass** die Formschlussverbindung eine Keder-Verbindung umfasst.

8. Dichteinrichtung (14) nach einem der vorstehenden Ansprüche,
**dadurch gekennzeichnet, dass** das erste Verbindungsmittel (20) und/oder das zweite Verbindungsmittel (21) dazu ausgebildet sind, eine Rastverbindung zwischen dem ersten Kopplungsteil (18) und dem Dichtteil (19) und/oder dem ersten Basisteil (17) herzustellen.

9. Dichteinrichtung (14) nach einem der vorstehenden Ansprüche,
**dadurch gekennzeichnet, dass** das erste Basisteil (17) und/oder das erste Kopplungsteil (18) ein Strangpressprofil aufweisen.

10. Dichteinrichtung (14) nach einem der vorstehenden Ansprüche, **gekennzeichnet durch** eine Klebverbindung und/oder eine Bolzenverbindung zum Verbinden des ersten Basisteils (17) mit dem ersten Körper (15).

11. Dichteinrichtung (14) nach einem der vorstehenden Ansprüche, **gekennzeichnet durch** ein entsprechend dem ersten Kopplungsteil (18) ausgebildetes zweites Kopplungsteil (23).

12. Dichteinrichtung (14) nach einem der vorstehenden Ansprüche,
**dadurch gekennzeichnet, dass** das Dichtteil (19) und das erste Kopplungsteil (18) in einer Orthogonalprojektion auf eine erste Verbindungsfläche (29) des ersten Basisteils (17) zum Verbinden mit dem ersten Körper (15) das erste Basisteil (17) vollständig überlappen.

13. Vorrichtung (1), aufweisend
13.1 einen ersten Körper (15),
13.2 einen zweiten Körper (16), und
13.3 mindestens eine mit dem ersten Körper (15) und mit dem zweiten Körper (16) verbundene Dichteinrichtung (14) nach einem der Ansprüche 1 bis 12.

14. Vorrichtung (1) nach Anspruch 13, **dadurch gekennzeichnet, dass** diese eine Gleisbauvorrichtung (1) ist.

15. Vorrichtung (1) nach Anspruch 13 oder 14, **dadurch gekennzeichnet, dass** der erste Körper (15) eine Außenwand (12.1 - 12.4) eines Fahrwagens (3) ist.
